## Europäisches Patentamt

## European Patent Office

## Office européen des brevets

(19)

(11) Veröffentlichungsnummer: **0 087 702**
**B1**

(12) # EUROPÄISCHE PATENTSCHRIFT

(45) Veröffentlichungstag der Patentschrift:
**29.01.86**

(51) Int. Cl.⁴: **F 16 L 19/08**

(21) Anmeldenummer: **83101603.5**

(22) Anmeldetag: **19.02.83**

(54) **Rohrverbindung.**

(30) Priorität: **24.02.82 DE 3206570**

(43) Veröffentlichungstag der Anmeldung:
**07.09.83 Patentblatt 83/36**

(45) Bekanntmachung des Hinweises auf die Patenterteilung:
**29.01.86 Patentblatt 86/5**

(84) Benannte Vertragsstaaten:
**BE CH FR GB IT LI NL SE**

(56) Entgegenhaltungen:
**BE - A - 650 170**
**FR - A - 1 556 413**
**FR - A - 2 237 102**
**US - A - 2 444 380**
**US - A - 3 594 023**

(73) Patentinhaber: **Maier, Hans-Paul, Wilhelmstrasse 34,**
**D-7730 Villingen-Schwenningen (DE)**

(72) Erfinder: **Maier, Hans-Paul, Wilhelmstrasse 34,**
**D-7730 Villingen-Schwenningen (DE)**

(74) Vertreter: **Gramm, Werner, Prof. Dipl.-Ing. et al,**
**Patentanwälte Gramm + Lins Theodor-Heuss-Strasse 2,**
**D-3300 Braunschweig (DE)**

**Beschreibung**

Die Erfindung betrifft eine Rohrverbindung zwischen zwei stumpf miteinander zu verbindenden Rohrenden, die jeweils eine lose auf die beiden Rohrenden aufgeschobenen Flansch aufweisen, welche Flansche über eine Verschraubung gegeneinander verspannbar sind und je eine Klemmkammer aufweisen, die zum Verbindungsstoss hin offen ist und ein auf jedes Rohrende aufgeschobenes Klemmelement übergreift, das in die zugeordnete Klemmkammer eintaucht, sich mit einem radial innenliegenden Klemmrand auf dem Rohrende abstützt, hinsichtlich eines radial aussenliegenden Klemmrandes von einer Klemmfläche der Klemmkammer übergriffen wird und in axialer Richtung zum Verbindungsstoss hin über die Stirnfläche des Flansches hinaus ausgeformt ist, dass eine das Klemmelement beaufschlagende axiale Druckkraft zu einer Vergrösserung des Aussendurchmessers und zu einer Verkleinerung des Innendurchmessers des Klemmelementes führt, wobei zwischen den sich gegenüberliegenden Klemmelementen auf die Rohrenden zwei Kammerteile lose aufgeschoben sind, die jeweils eine zum Verbindungsstoss hin offene, konusförmig ausgebildete Dichtungskammer aufweisen, in die eine Elastomer-Dichtung ragt.

Eine derartige Ausführungsform lässt sich der FR-A-2 237 102 entnehmen. Hier ist u.a. eine Rohrverbindung offenbart, bei der die Dichtung dreiteilig ausgebildet ist und aus einem den Verbindungsstoss zwischen den beiden Rohrenden übergreifenden Rohrstück besteht, gegen dessen stirnseitigen Flansche jeweils ein O-Ring anliegt. Dieses Rohrstück ist extra lang ausgebildet, um zwischen den beiden Rohrenden einen lichten Abstand vorsehen zu können, der ein «Kippen» der Rohrenden relativ zueinander zulassen soll. In Verbindung mit der doppel-konisch ausgebildeten Innenwandung des Rohrstückes ergibt sich dadurch im Rohrstoss eine Kammer, die eine Depotbildung –– beispielsweise durch Entmischung des durch die Rohre zu fördernden Mediums — hervorruft. Derartige Rohrverbindungen lassen sich daher nicht in der chemischen Industrie einsetzen.

Diese bekannte Rohrverbindung eignet sich nur für Präzisionsrohre, lässt sich aber nicht im Rohrleitungsbau einsetzen, wo grosse Durchmessertoleranzen und/oder unrunde Rohrausbildungen auszugleichen sind. Denn die aus einem Engbereich verdrängte Materialmenge eines O-Ringes reicht nicht aus, um z.B. bei einem unrunden Rohr im Oberbereich eine ausreichende Abdichtung sicherzustellen. Um überhaupt eine nennenswerte Abdichtung zu erzielen, müssen für jeden Rohrdurchmesser exakt angepasste O-Ringe verwendet werden. Dies zwingt zu einer entsprechend grossen Lagerhaltung und führt insbesondere auf einer Baustelle zu Nachteilen. Auch gegenüber Unterdrücken kann keine ausreichende Abdichtung gewährleistet werden. So lässt sich diese vorbekannte Rohrverbindung z.B. nicht bei Lebensmittel-Aufbereitungsmaschinen einsetzen, die häufig im Vakuumbereich arbeiten.

Die Handhabung der vorbekannten Rohrverbindung ist wegen ihrer Dreiteiligkeit aufwendig, insbesondere bei einer Montage auf der Baustelle.

Die US-A-2 444 380 offenbart Rohrverbindungen, bei denen die miteinander zu verbindenden Rohrenden einen lichten Abstand voneinander aufweisen, der von einer Metallbuchse übergriffen ist. Diese Buchse ragt mit ihren stirnseitigen Enden unmittelbar in je eine Klemmkammer von zwei lose auf die Rohrenden aufgeschobenen Flanschen und beaufschlagt hier die in die Klemmkammern eingeschobenen Klemmelemente, die aus konvex ausgebildeten Ringen bestehen können. Dabei können zwischen dem stirnseitigen Ende der Buchse und den zugeordneten Klemmelementen elastische Formdichtungen vorgesehen sein. Klemmkammer und Dichtungskammer sind also in einer einzigen Kammer zusammengefasst. Es fehlen gegenüber der eingangs erläuterten Rohrverbindung die lose auf die Rohrenden aufgeschobenen Kammerteile. Dennoch entsprechen Aufbau und Wirkungsweise weitgehend der eingangs erläuterten Rohrverbindung. Auch bei dieser Ausführungsform ist keine Dichtung vorgesehen, die eine Materialverdrängung eines elastischen Dichtungsmaterials über den Rohrstoss hinweg ermöglicht.

Der Erfindung liegt die Aufgabe zugrunde, eine Rohrverbindung der eingangs erläuterten Bauart zu schaffen, die absolut betriebssicher abdichtet, alle auftretenden Kräfte sicher aufnimmt und somit auch als Hochdruck-Rohrverbindung geeignet ist.

Diese Aufgabe wird gemäss der Erfindung dadurch gelöst, dass die Dichtung eine den Verbindungsstoss umschliessende, gegenüber der Aussenkontur der beiden Dichtungskammern Übermass aufweisende Formdichtung ist, in die ein Innenring aus hartem und/oder plastischem Werkstoff eingebettet ist, dergestalt, dass ein Gegeneinanderdrücken der beiden Kammerteile die Dichtung mit einer Kraft beaufschlagt, die sowohl axial als auch radial nach innen gerichtet ist.

Der Innenring liegt bei der montierten Rohrverbindung unmittelbar über dem Verbindungsstoss. Durchgeführte Versuche haben ergeben, dass eine erfindungsgemässe Rohrverbindung mit der Nennweite 50 einen Dauerbetriebsdruck von 300 bar einwandfrei hält. Diese überraschend hohe Abdichtwirkung ist offenbar darauf zurückzuführen, dass innerhalb der Elastomer-Formdichtung eine Materialverdrängung auch über den Rohrstoss hinweg, also zwischen den beiden ringförmigen, neben dem Metallring liegenden Dichtbereichen erfolgen kann. Dadurch lassen sich nicht nur grosse Durchmessertoleranzen, sondern auch unrunde Rohrausbildungen ausgleichen. Eine zu starke Verformung des Elastomers wird verhindert, so dass das Elastomer auch bei hoher Beanspruchung immer noch im elastischen Bereich verbleibt.

Die die Dichtung beaufschlagende Abdichtkraft kann durch die die beiden Flansche gegeneinander verspannende Verschraubung aufgebracht werden, wenn die beiden Kammerteile in axialer Richtung unmittelbar von den beiden Flanschen oder aber über die Klemmelemente beaufschlagt werden. Es kann aber auch vorgesehen werden, dass die beiden Kammerteile durch eine eigene Verschraubung gegeneinander verspannbar sind.

Die neue Rohrverbindung lässt sich nicht nur sehr leicht montieren, sondern ebenso leicht auch demontieren und kann mit Ausnahme der Dichtung mit allen übrigen Einzelheiten mehrfach verwendet werden. Da bei der Montage der neuen Rohrverbindung deren Einzelteile lediglich aufgesteckt und über Schraubverbindungen gegeneinander verspannt werden müssen, können alle in explosionsgeschützter Umgebung vorgeschriebenen Schutzmassnahmen entfallen. Die neue Rohrverbindung baut verhältnismässig klein und führt gegenüber herkömmlichen geschweissten Flanschverbindungen zu Gewichtseinsparungen von über 40%. Dies erweist sich z.B. im Schiffsbau von besonderem Vorteil, wo sich aufgrund der häufig beengten Platzverhältnisse auch der Montagevorteil besonders auswirkt.

Jedes Klemmelement kann aus zumindest einer konvex ausgebildeten Scheibe bestehen, die z.B. eine Tellerfeder sein kann. Als störunanfälliger haben sich jedoch gezahnte scheibenförmige Klemmelemente erwiesen.

Der radial innenliegende Klemmrand jedes Klemmelementes kann angeschärft sein, um so beim Verspannen der Rohrverbindung zusätzlich zu der kraftschlüssigen Verbindung einen leichten Formschluss zwischen Klemmelement und Rohraussenwandung zu bilden.

Da die Flansche der neuen Rohrverbindung mit dem durch die Rohre geführten Medium nicht in Berührung kommen, ist es auch bei bestimmten aggressiven Medien nicht erforderlich, die Flansche aus nichtrostendem Stahl herzustellen.

Bei der Montage der neuen Rohrverbindung ist es nicht erforderlich, dass die beiden Rohrenden aneinander anliegen.

Während die Flansche der neuen Rohrverbindung in üblicher Weise rund ausgebildet sein können, kann für die beiden Kammerteile eine angenähert dreieckförmige Aussenkontur vorgesehen werden, so dass die um jeweils max. 120 Umfangsgrad gegeneinander versetzt angeordneten Schrauben der Flanschverschraubung seitlich an den Kammerteilen vorbeiführen können.

In der Zeichnung ist eine als Beispiel dienende Ausführungsform der Erfindung dargestellt. Es zeigen:

Fig. 1 eine in der Montage befindliche Rohrverbindung;

Fig. 2 einen Flansch in Draufsicht;

Fig. 3 ein Kammerteil in Draufsicht und

Fig. 4 die Rohrverbindung gemäss Fig. 1 in fertig montiertem Zustand.

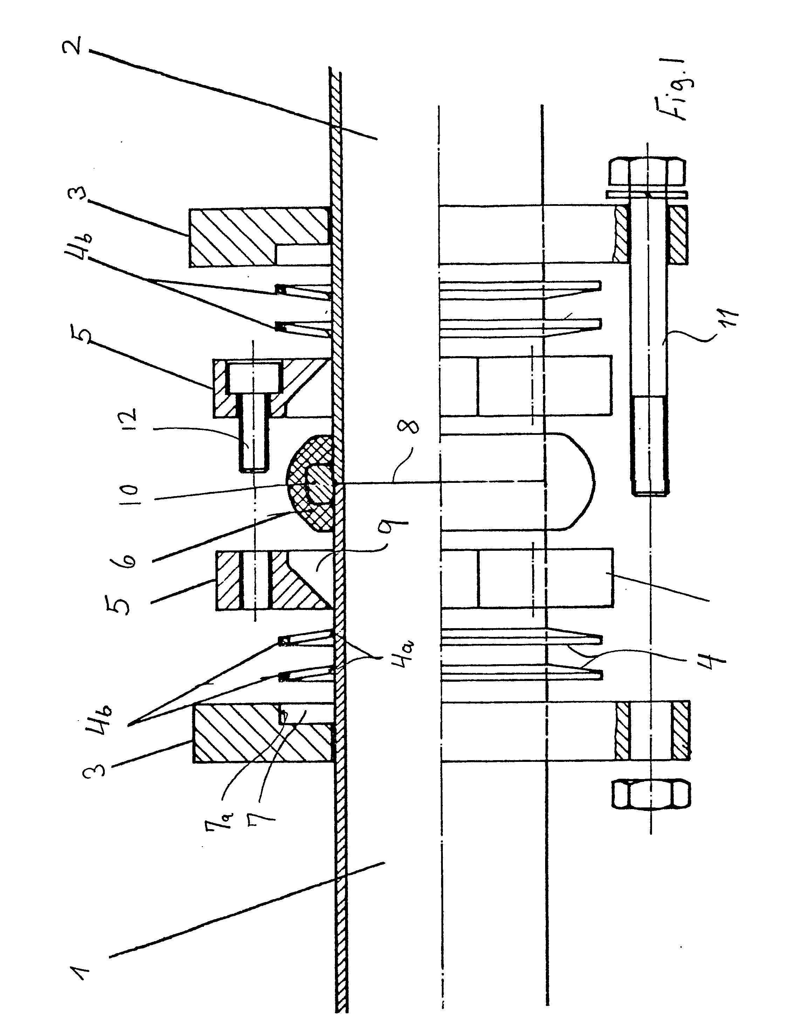

Zur Herstellung einer Rohrverbindung gemäss Fig. 1 werden auf zwei stumpf miteinander zu verbindende Rohrenden 1, 2 jeweils zuerst ein Flansch 3, zwei Klemmelemente 4, ein Kammerteil 5 sowie für beide Rohrenden 1, 2 gemeinsam eine Dichtung 6 aufgeschoben.

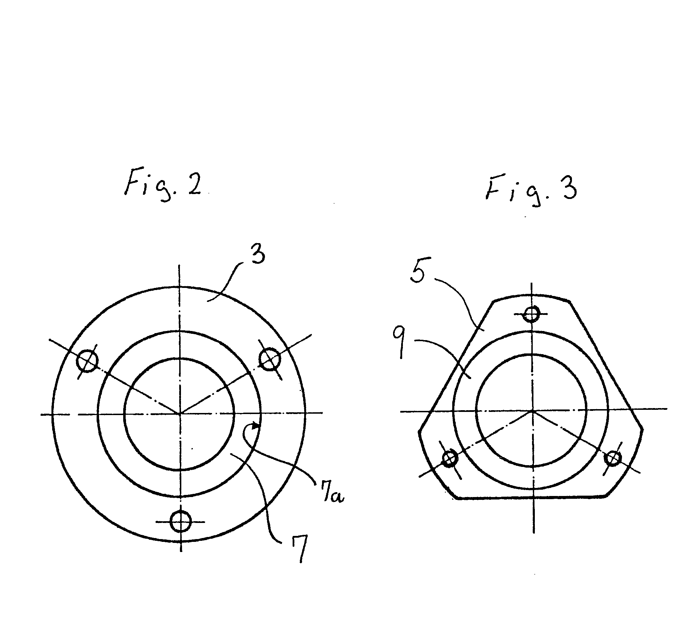

Der in Fig. 2 in Draufsicht dargestellte Flansch 3 weist eine kreisringförmige Klemmkammer 7 auf, die zum Verbindungsstoss 8 hin offen ist. In diese Klemmkammer 7 werden die beiden Klemmelemente 4 eingeschoben, die aus einer konvex ausgebildeten Scheibe bestehen, sich mit einem radial innenliegenden Klemmrand 4a auf dem Rohrende 1 bzw. 2 abstützen und hinsichtlich eines radial aussenliegenden Klemmrandes 4b von einer ringförmigen Klemmfläche 7a der Klemmkammer 7 übergriffen werden. In entlastetem Zustand ragt das jeweils zweite Klemmelement 4 über die Stirnfläche des zugeordneten Flansches 3 hinaus. Die Ausbildung der Klemmelemente 4 ist dabei so gewählt, dass eine die Klemmelemente in axialer Richtung gegen die Rückseite der zugeordneten Klemmkammer 7 drückende Kraft zu einer Vergrösserung des Aussendurchmessers und gleichzeitig zu einer Verkleinerung des Innendurchmessers des Klemmelementes führt.

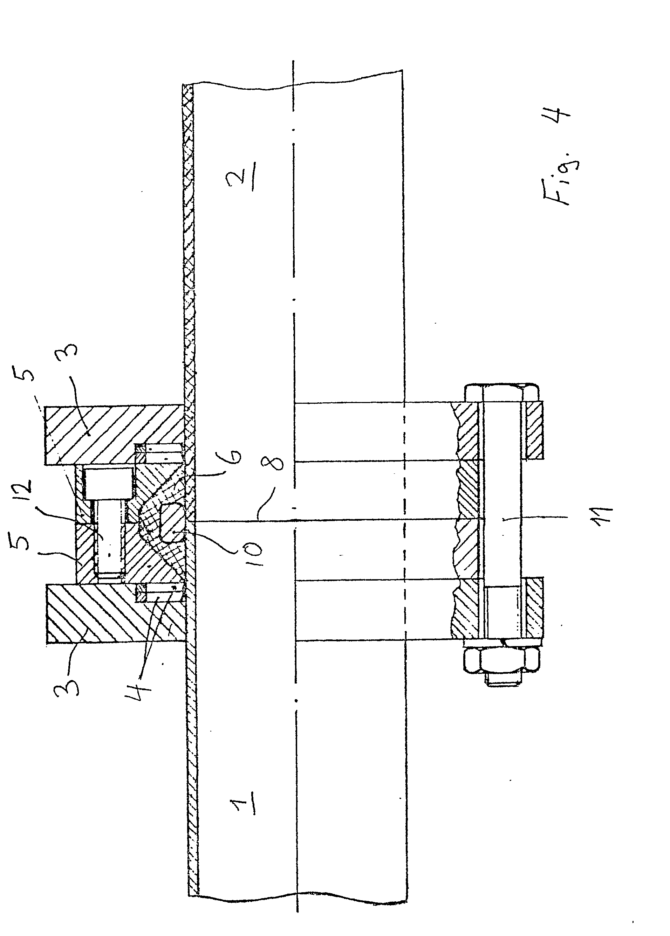

Das in Fig. 3 in Draufsicht dargestellte Kammerteil 5 weist eine angenähert dreieckförmige Aussenkontur auf und ist mit einer jeweils zum Verbindungsstoss 8 hin offenen Dichtungskammer 9 versehen, die im dargestellten Ausführungsbeispiel konusförmig ausgebildet ist, sich also in Richtung auf den benachbarten Flansch 3 verjüngt.

Der Verbindungsstoss 8 wird von der Dichtung 6 umschlossen, die als Elastomer-Formdichtung ausgebildet ist, in die ein Innenring 10 aus hartem und/oder plastischem Werkstoff, z.B. Metall, eingebettet ist. Die Aussenkontur der Dichtung 6 entspricht etwa der der beiden Dichtungskammern 9 in den Kammerteilen 5, weist jedoch ein Übermass auf, so dass ein Gegeneinanderdrücken der beiden Kammerteile 5 die Dichtung mit einem Druck beaufschlagt, der axial und radial nach innen gerichtet ist.

Um die beiden Flansche 3 gegeneinander verspannen zu können, sind z.B. drei gleichmässig am Flanschumfang verteilt angeordnete Schraubbolzen 11 vorgesehen, während zum Verspannen der beiden Kammerteile 5 drei Inbusschrauben 12 angeordnet sind.

Zur Montage der in Fig. 1 dargestellten Rohrverbindung werden zuerst die beiden Kammerteile 5 über die Inbusschrauben 12 miteinander verschraubt, nachdem die Dichtung 6 genau über den Verbindungsstoss 8 geschoben worden ist. Anschliessend werden die Klemmelemente 4 auf Anschlag gegen die Kammerteile 5 und dann die Flansche 3 auf Anschlag gegen die Klemmelemente geschoben. Durch Anziehen der Schraubbolzen 11 werden die Flansche 3 gegeneinander verspannt; hierdurch erfolgt die vorstehend erläuterte Verformung der Klemmelemente 4, die dadurch eine kraftschlüssige und bei angeschärftem innenliegenden Klemmrand 4a auch eine formschlüssige Verbindung zwischen Flansch und Rohrende herstellen. Für die Funktion der neuen Rohrverbindung ist es nicht erforderlich, dass die Flansche 3 plan gegen die Kammerteile 5 anliegen; wesentlich ist allein, dass beim Anziehen der Schraubbolzen 11 die Klemmelemente 4 in axialer Richtung von den Kammerteilen 5 beaufschlagt werden.

## Patentansprüche

1. Rohrverbindung zwischen zwei stumpf miteinander zu verbindenden Rohrenden (1, 2), die je einen lose auf die beiden Rohrenden (1, 2) aufgeschobenen Flansch (3) aufweisen, welche Flansche über eine Verschraubung (11) gegeneinander verspannbar sind und je eine Klemmkammer (7) aufweisen, die zum Verbindungsstoss (8) hin offen ist und ein auf jedes Rohrende (1, 2) aufgeschobenes Klemmelement (4) übergreift, das in die zugeordnete Klemmkammer (7) eintaucht, sich mit einem radial innenliegenden Klemmrand (4a) auf dem Rohrende (1, 2) abstützt, hinsichtlich eines radial aussenliegenden Klemmrandes (4b) von einer Klemmfläche (7a) der Klemmkammer übergriffen wird und in axialer Richtung zum Verbindungsstoss (8) hin über die Stirnfläche des Flansches hinaus so ausgeformt ist, dass eine das Klemmelement beaufschlagende axiale Druckkraft zu einer Vergrösserung des Aussendurchmessers und zu einer Verkleinerung des Innendurchmessers des Klemmelementes führt, wobei zwischen den sich gegenüberliegenden Klemmelementen (4) auf die Rohrenden (1, 2) zwei Kammerteile (5) lose aufgeschoben sind, die jeweils eine zum Verbindungsstoss (8) hin offene, konusförmig ausgebildete Dichtungskammer (9) aufweisen, in die eine Elastomer-Dichtung (6) ragt, dadurch gekennzeichnet, dass die Dichtung (6) eine den Verbindungsstoss (8) umschliessende, gegenüber der Aussenkontur der beiden Dichtungskammern (9) Übermass aufweisende Formdichtung ist, in die ein Innenring (10) aus hartem und/oder plastischem Werkstoff eingebettet ist, dergestalt, dass ein Gegeneinanderdrücken der beiden Kammerteile (5) die Dichtung (6) mit einer Kraft beaufschlagt, die sowohl axial als auch radial nach innen gerichtet ist.

2. Rohrverbindung nach Anspruch 1, dadurch gekennzeichnet, dass die beiden Kammerteile (5) durch eine Verschraubung (12) gegeneinander verspannbar sind.

3. Rohrverbindung nach Anspruch 1 oder 2, dadurch gekennzeichnet, dass jedes Klemmelement (4) aus zumindest einer konvex ausgebildeten Scheibe besteht.

4. Rohrverbindung nach Anspruch 1, 2 oder 3, dadurch gekennzeichnet, dass der radial innenliegende Klemmrand (4a) jedes Klemmelementes (4) angeschärft ist.

**Claims**

1. A pipe joint between two pipe ends (1, 2) to be butt-jointed, each pipe end (1, 2) carrying a movable flange (3), both flanges (3) being tightenable against each other via screw means (11), each flange comprising a clamp chamber (7) opened towards the butt joint (8) and overlapping a clamping element (4) slipped onto each pipe end (1, 2), each clamping element (4) immersing into the corresponding clamp chamber (7), supporting itself on the pipe end (1, 2) by means of an inner, radial clamping edge (4a) being overlapped, with respect to an outer, radial clamping edge (4b), by a clamping surface (7a) of said clamp chamber, and protruding the front surface of the flange in axial direction towards the butt joint (8) in such a way that an axial pressure acting upon said clamping element will increase the external diameter and decrease the internal diameter of the clamping element, whereby the pipe ends (1, 2) carry between the opposing clamping elements (4) two movable chamber means (5), each comprising a sealing chamber (9) having a conical configuration and opened towards said butt joint (8), an elastomeric gasket (6) projecting into said sealing chamber (9), characterized in that said gasket (6) is a profiled sealing encircling the butt joint (8) and being oversized with respect to the outer contour of the two sealing chambers (9), whereby an inner ring (10) of a hard and/or plastic material is embedded in said profiled sealing in such a way that pressing both chamber means (5) against each other applies an axially as well as radially inwardly directed pressure to the gasket (6).

2. The pipe joint according to claim 1, wherein the two chamber means (5) are tightenable against each other via screw means (12).

3. The pipe joint according to claim 1 or 2, wherein each clamping element (4) comprises at least one disc having a convex configuration.

4. The pipe joint according to claim 1, 2 or 3, wherein the inner radial clamping edge (4a) of each clamping element (4) is scarfed.

**Revendications**

1. Raccord entre deux extrémités (1, 2) de tuyaux qui sont à raccorder l'une à l'autre bout à bout et présentent chacune un flasque (3) enfilé, sans serrer, sur les deux extrémités (1, 2) de tuyaux, les deux flasques pouvant être contraints en direction l'une de l'autre au moyen d'un boulonnage (11) et présentant chacun une chambre de serrage (7) qui est ouverte en direction du joint (8) du raccord et enserre un élément de serrage (4) qui est enfilé sur chaque extrémité de tuyau (1, 2), s'enfonce dans la chambre de serrage (7) correspondante, s'appuie sur l'extrémité du tuyau (1, 2) par un bord de serrage (4a) dirigé radialement vers l'intérieur, est lui-même enserré par une surface de serrage (7a) de la chambre de serrage pour ce qui concerne un bord de serrage (4b) dirigé radialement vers l'extérieur et que la surface frontale du flasque déforme axialement en direction du joint (8) du raccord de façon telle qu'une force de pression axiale s'exerçant sur l'élément de serrage conduit à un accroissement du diamètre extérieur et à une diminution du diamètre intérieur de l'élément de serrage, étant précisé qu'entre les éléments de serrage (4) situées l'une en face de l'autre sont enfilées, sans serrage, sur les extrémités (1, 2) de tuyau deux chambres partielles (5) qui comportent respectivement, pour une garniture d'étanchéité, une chambre (9) ouverte en direction du joint (8) du raccord, de forme conique et dans laquelle se trouve une garniture d'étanchéité en élastomère (6), caractérisé en ce que la garniture d'étanchéité (6) est une garniture d'étanchéité de forme qui entoure le joint (8) du raccord, présente un surdimensionnement par rapport au contour extérieur des deux chambres (9) pour garniture d'étanchéité et dans laquelle une bague intérieure en matériau dur et/ou plastique est enrobée de façon telle que lorsque l'on pousse l'une contre l'autre les deux chambres partielles (5) on exerce sur la garniture d'étanchéité (6) une force dirigée aussi bien axialement que radialement vers l'intérieur.

2. Raccord de tuyau selon la revendication 1, caractérisé en ce que les deux chambres partielles (5) peuvent être contraintes l'une en direction de l'autre au moyen d'un boulonnage (12).

3. Raccord de tuyau selon la revendication 1 ou la revendication 2, caractérisé en ce que chaque élément de serrage (4) est constitué d'au moins un disque de forme convexe.

4. Raccord de tuyau selon la revendication 1, 2 ou 3, caractérisé en ce que le bord de serrage (4a), situé radialement vers l'intérieur, de chaque élément de serrage (4) est affuté.

Fig.1

0 087 702

Fig. 2

Fig. 3

0 087 702

Fig. 4